# EUROPEAN PATENT SPECIFICATION

(11) **EP 4 496 840 B1**
(45) Date of publication and mention of the grant of the patent: **04.02.2026**
(21) Application number: 23720189.2
(22) Date of filing: 21.03.2023
(51) Int. Cl.: C08J 7/12, C08J 7/04

(54) **SURFACE ACTIVATION OF SILICONE**
OBERFLÄCHENAKTIVIERUNG VON SILIKON
ACTIVATION DE SURFACE DE SILICONE

(30) Priority: 21.03.2022 IS 50359
(43) Date of publication of application: 29.01.2025
(73) Proprietor: Haskoli Islands, 102 Reykjavik (IS)
(72) Inventor: MASSON, Mar, 101 Reykjavik (IS)
(74) Representative: Arnason Faktor
(86) International application number: PCT/IS2023/050003
(87) International publication number: WO 2023/181081

(56) References cited:
- WO-A1-2011/076924
- US-A- 4 828 561
- DATABASE WPI Week 201917, Derwent World Patents Index; AN 2019-05490D, XP002809578
- DATABASE WPI Week 201777, Derwent World Patents Index; AN 2017-65929F, XP002809579

## Description

### FIELD OF INVENTION

The invention is within the field of silicone chemistry and specifically involves surface modification of silicone to introduce amino groups that can be further reacted with desired substituents.

### BACKGROUND

Silicones, also known as polysiloxanes, are a class of synthetic polymers that consist of an "inorganic" backbone of alternating silicon and oxygen atoms with two organic side groups linked to the silicon atom. The most common type is PDMS (polydimethylsiloxane; formula I). Formula I shows a depiction of the basic PDMS structure (note that the terminal Si atoms may in some cases, have one or more -OH groups instead of methyl groups). Silicones are both chemically and thermally stable and widely used in insulators, packaging, building materials, cosmetics, drug delivery systems, and medical devices. Silicones are available in many different forms, including elastomers, gels, lubricants, foams, and adhesives. Liquid Silicone rubbers and elastomers can be created from straight-chain polymers by crosslinking. Commercial silicone materials will also typically contain various additives affecting the properties such as color, rheology, adhesiveness etc. Commercial silicone elastomers are commonly reinforced with mineral additives fillers such as silica, calcium carbonate, montmorillonite, carbon black, zinc oxide, titanium dioxide, glass, and graphene, etc. (as well as other materials improve handling such as boric acid and polyhydroxyl alcohol (see e.g. US Patent 4,252,709). Medical-grade silicones are biocompatible and bioinert and, therefore, a common material in medical implants, including prostheses, artificial heart valves, and various catheters.

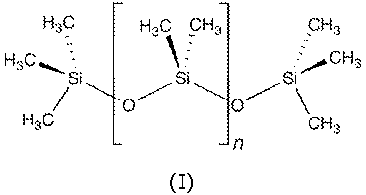

Although flexibility and other properties favor the medical use of silicone, the hydrophobic surface of silicone is prone to bacterial and fungal colonization and biofilm formation. Fungal or bacterial biofilm growth on the surface of silicone can be an issue for medical applications inside body, as an example, Catheter-Associated Urinary Tract Infections (CAUTI) (Siddiq & Darouiche, NATURE REVIEWS UROLOGY 2012 9 305 DOI10.1038/nrurol.2012.68) that are the most common nosocomial infections causing a significant health burden. Microbial contamination of silicone surfaces can also be a risk factor for applications in the food sector.

*Surface modification*: The surface of silicone can be chemically modified to increase the resistance to bacterial colonization and biofilm formation. The most common approach is to introduce some hydrophilic moieties such as polyethylene glycol (PEG) to reduce the hydrophobicity and repel bacteria, slowing the colonization and biofilm formation. An alternative approach is to load the polymer matrix with a lipophilic disinfectant or antimicrobial drug that can leach from the material to kill infectious microorganisms (Kottmann et al. CHEMISTRY-AN ASIAN JOURNAL 2017 12 1168 DOI10.1002/asia.201700244). The disadvantage of this latter approach is that efficacy will be reduced over time as the antimicrobial agent is lost, and the leaching of bioactive agents can also influence the regulatory status of the device. Coating of the silicone surface with biocompatible polymers and proteins can also be used to improve biocompatibility and reduce implant-related issues like scar tissue formation.

*Coating silicone*: Silicone is generally considered chemically inert, as it is lacking reactive groups, and therefore, for coating silicone the surface is typically first activated to introduce groups that can be targeted for chemical modification. The commonly used approach is plasma (ozone) treatment, to oxidize the surface and introduce -OH groups, but treatment with other oxidizing agents such as H₂O₂ has also been used for the same purpose (Bračič et al. Bioactive Functionalisation of Silicones with Polysaccharides, SpringerBriefs in Molecular Science Biobased Polymers ISBN 978-3-030-02275-4 (eBook) 2018 https://doi.org/10.1007/978-3-030-02275-4). This is often followed by a second step where the surface is treated with silanization reagent (R-Si-(OR')₃) such as APTMS (3-Aminopropyl)trimethoxysilane) to introduce a more nucleophilic amino group on the surface. The silicone surface can then be coated by using the nucleophilic groups on the surface to initiate the polymerization of monomeric building blocks or by reacting with electrophilic moieties on a polymer or other compound used for the coating or by reacting them with a crosslinker and then reacting with a electrophilic moieties on a polymer or other compound used for the coating. Thus, a stable coating is obtained, where a polymer coating is covalently attached to the surface. Alternatively, the oxidized surface can be treated with silanization reagent such as (3-Glycidyloxypropyl)trimethoxysilane to introduce electrophilic epoxy groups on the surface. This can be further reacted with a nucleophilic polymer or other compound to covalently coat the surface.

US 2016/0130403 (Brook et al.) discloses that a hydrophilic or reactive polymer linked to a linear or branched hydrophobic silicone polymer chain can be physically absorbed onto the surface silicone elastomer to form a stable hydrophilic coating.

US 10,465,055 discloses treating a silicone substrate with a polymer containing at least three reactive sites to promote "covalent grafting" of said polymer to the substrate but presupposes that the substrate has accessible Si-H groups, which can be obtained according to the disclosure by dipping a silicone surface into hydrogen fluoride aqueous solution.

WO 2011/076924 discloses a method for modifying silicone rubber surfaces that involves swelling at least the surface of the silicone rubber matrix with a silicone rubber and treating the silicone rubber matrix during or after the swelling with a solution comprising a reactive silane.

US 4,828,561 discloses method that involves dipping a silicone rubber article in a solution of an amino functional silane coupling agent in methanol and water, activating thus obtained functional reactive amine sites with an aryl halide or dialdehyde to provide active connecting groups, and coupling a biological molecule thereto.

CN 109134909A discloses a method where a glass surface is subjected with PDMS (polydimethylsiloxane) prepolymer and vinyl silicone oil, then β-mercaptoethylamine and benzoin dimethyl ether in ethanol is added to the surface, and UV irradiation is applied to crosslink the vinyl groups and thereby embed the amine groups in the crosslinked polymer layer.

CN 107151346A discloses methods where amino silanes dissolved in ethanol or isopropanol are adsorbed onto PDMS films and preferably the silicone is subjected to a solvent that causes it to swell for the silylating agents to better diffuse into the PDMS film.

### SUMMARY

The invention provides a new process for surface modifying silicone material and for coating silicone material. The invention provides a simple process for activation of the surface such that it can readily be further modified. This process is based on the surprising finding that amino groups can be introduced on the silicone surface without prior surface oxidation, with processes described herein.

Accordingly, the invention sets forth new methods for modifying a silicone surface and thereby make said surface amenable towards further modification. Specifically, the methods presented herein comprise treating a silicone surface with a substance selected from a specified group listed in claim 1 and further described herein below, which substance contains an amino group. A variety of substances have been tested by the inventor, and different conditions and settings, these can vary depending on the specific surface type and/or object being modified and what type of subsequent modification, chemically and functionally, is desired and intended. Advantageously, the method can be performed with readily available and economical reagents, mild conditions and environmentally benign solvents.

Accordingly, in a first aspect, the invention relates to a method defined in claim 1 for modifying a solid silicone surface, in particular silicone elastomer surface, to introduce amino groups to said surface that thus can be further modified, comprising treating the silicone elastomer surface with a substance that is selected from the list of claim 1.

The term "silicone surface" encompasses any type of surface on solid silicone objects which encompasses objects that may be from essentially only silicone as well as silicone objects that comprise common additives and further ingredients that are known in the art as minor ingredients in silicone, e.g. fillers, reinforcement agents, e.g. mineral fillers such as silica, alumina, calcium carbonate, carbon black, zinc oxide, titanium dioxide, glass, graphene crosslinkers, catalysts, boric acid, polyhydroxyl alcohols and such. Thus, silicone objects as used herein include objects from silicone elastomer or silicone rubber.

The reagent substance can be optionally dissolved in a solvent selected from water-miscible solvents, such as but not limited to methanol, ethanol, propanol, isopropanol, 1-butanol, 2-butanol, t-butyl alcohol, glycerol, water or an aqueous solution, and any miscible mixture of one or more of these. Then the silicone surface is placed in said solvent with the dissolved reagent.

Various amines have been found useful as a reagent in the method of the invention. Non-limiting examples of specific reagents are listed in Table 1.

**Table 1**

| | Structure/formula | Name |
|---|---|---|
| 1 | 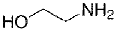 | ethanolamine |
| 2 | 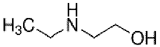 | 2-(Ethylamino)ethanol |
| 3 | HOCH₂CH₂NHCH₂CH₂OH | Diethanolamine |
| 4 | 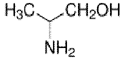 | 2-Amino-1-propanol |
| 5 | 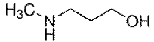 | 3-Methylamino-1-propanol |
| 6 | 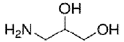 | 3-Amino-1,2-propanediol |
| 7 | 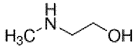 | 2-(Methylamino)ethanol |
| 8 | HOCH₂CH₂NHNH₂ | 2-Hydroxyethylhydrazine |
| 9 | H₂NCH₂CH₂CH₂OH | 3-Amino-1-propanol |
| 10 | 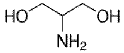 | 2-Amino-1,3-propanediol |
| 11 | 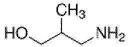 | 3-amino-2-methylpropan-1-ol |
| 12 | 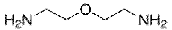 | 2-(2-Aminoethoxy)ethylamine |
| 13 | 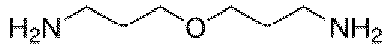 | 3,3'-azanediyldipropan-1-ol |
| 14 | 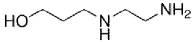 | 3-[(2-Aminoethyl)amino]-1-propanol |
| 15 | 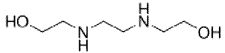 | N,N'-Bis(2-hydroxyethyl)ethylenediamine |
| 16 | 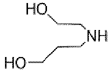 | 3-(2-hydroxyethylamino)-1-propanol |
| 17 | 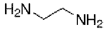 | Ethylenediamine |
| 18 | CH₃NHCH₂CH₂NH₂ | N-Methylethylenediamine |
| 19 | 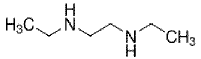 | N,N'-Diethylethylenediamine |
| 20 | 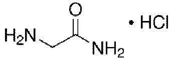 | Glycinamide |

Thus, in some embodiments, the reagent is an amine that comprises a straight or branched alkane or alkene chain, at least one primary or secondary amine and/or amide group, and at least one further nucleophilic group selected from OH, SH COOH, and NH₂, amide, and NHR where R is alkyl. In some embodiments, the reagent is an ester, ether or alcohol with at least one primary or secondary amine group. The reagent can also be an amine with two or more primary or secondary amino groups, some examples of which are shown in Table 4.

Useful reagents also include amino acids and amino acid derivatives, including the naturally occurring amino acids as well as derivatives thereof such as salts and esters thereof. Preferred amino acids are those with nucleophilic groups on sidechains such as the basic amino acids (histidine, lysine) and those with -OH or -SH groups on sidechain (tyrosine, serine, threonine, cysteine). Also useful are small peptides, such as but not limited to dipeptides, tripeptides, and other soluble oligopeptides, preferably including at least one amino acid of the preferred type with a basic side chain -OH or -SH or polyethyleneimine oligomers or polymers that contain large number of secondary amino groups and also primary amino groups.

In some embodiments the reagent substance is a molecule represented by the formula W(X)-NHR⁴ where W is a molecule comprising an aromatic structure and X represents OH, SH, COOH, amide, NH₂ or NHR where R is alkyl or alkenyl, and R⁴ are as defined above. Each of the groups X and NHR⁴ may idependently be linked directly on carbon atoms of the aromatic structure or on alkyl or alkylene sidechains therefrom. Non-limiting include the compounds depicted in Table 3.

**Table 3**

| | Structure | Name |
|---|---|---|
| 29 | 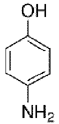 | 4-Aminophenol |
| 30 | 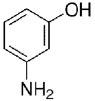 | 3-Aminophenol |
| 31 | 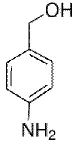 | 4-Aminobenzyl alcohol |
| 32 | 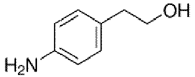 | 4-Aminophenethyl alcohol |
| 33 | 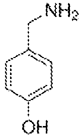 | 4-Hydroxybenzylamine |
| 34 | 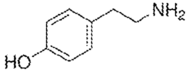 | Tyramine |

Table 4 shows a non-limiting list of other useful reagents.

**Table 4**

| | Structure/formula | Name |
|---|---|---|
| 35 | 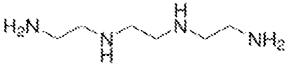 | Triethylenetetramine |
| 36 | 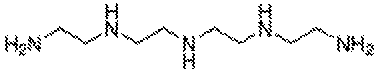 | Tetraethylenepentamine |
| 37 | H₂NCH₂CH₂NHCH₂CH₂OH | N-(2-Hydroxyethyl)ethylenediamine |
| 38 | 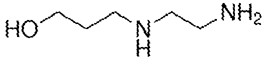 | 3-[(2-Aminoethyl)amino]-1-propanol |
| 39 | 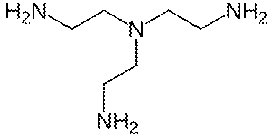 | Tris(2-aminoethyl)amine |
| 40 | 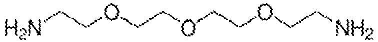 | 1,1-Diamino-3,6,9-trioxaundecane |
| 41 | H₂NCH₂CH₂CH₂NH₂ | 1,3-diaminopropane |
| 42 | 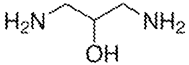 | 1,3-diamino-2-propanol |
| 43 | 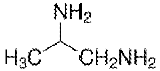 | 1,2-diaminopropane |
| 44 | 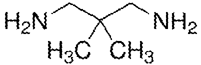 | 2,2-Dimethyl-1,3-propanediamine |
| 45 | 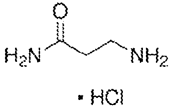 | 3-Aminopropanamide |
| 46 | 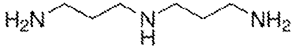 | Bis(3-aminopropyl)amine |
| 47 | 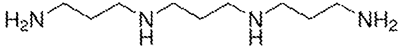 | N,N'-Bis(3-aminopropyl)-1,3-propanediamine |
| 48 | 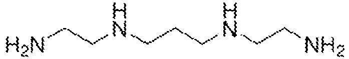 | N,N'-Bis(2-aminoethyl)-1,3-propanediamine |
| 49 | 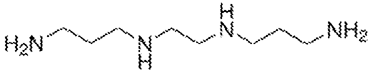 | 1,2-Bis(3-aminopropylamino)ethane |
| 50 | 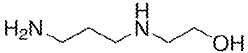 | 1,3-diamino-n-(2-hydroxyethyl)-propane |
| 52 | 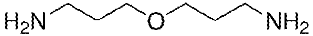 | 3-(3-aminopropoxy)propylamine |
| 53 | 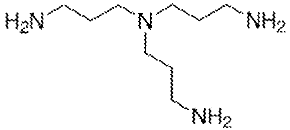 | Tris(3-aminopropyl)amine |
| 54 | 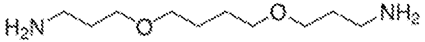 | 4,9-Dioxa-1,12-dodecanediamine |
| 55 | NH₂CH₂CH₂CH₂CH₂OH | 4-Amino-1-butanol |
| 56 | 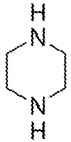 | Piperazine |
| 57 | 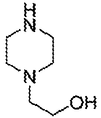 | 1-(2-Hydroxyethyl)piperazine |
| 58 | 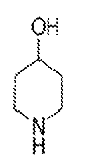 | 4-Hydroxypiperidine |
| 59 | 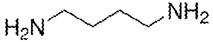 | 1,4-diaminobutane |
| 60 | 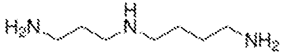 | Spermidine |
| 61 | 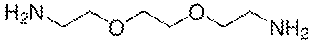 | 2,2'-(Ethylenedioxy)bis(ethylamine) |
| 62 | 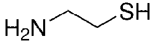 | Cysteamine |
| 63 | 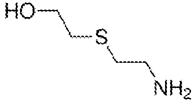 | 2-((2-aminoethyl)-thio)-ethanol |
| 64 | 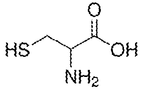 | Cysteine |
| 65 | 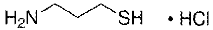 | 3-Amino-1-propanethiol |
| 66 | 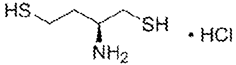 | 2-Aminobutane-1,4-dithiol |
| 67 | 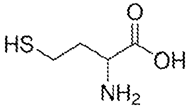 | Homocysteine |
| 68 | 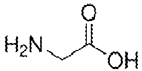 | Glycine |
| 69 | 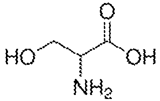 | serine |
| 70 | 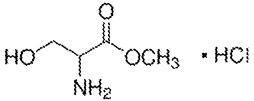 | Serin methyl ester |
| 71 | 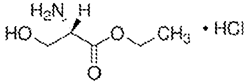 | Serin ethyl ester |
| 72 | 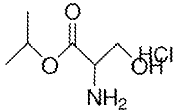 | Serin isopropyl ester |
| 73 | 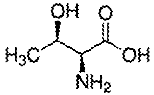 | Threonine |
| 74 | 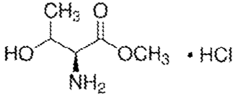 | Threonine methyl ester |
| 75 | 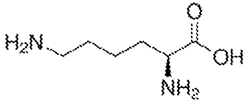 | Lysine |
| 76 | 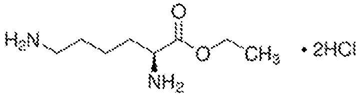 | Lysine ethyl ester |
| 77 | 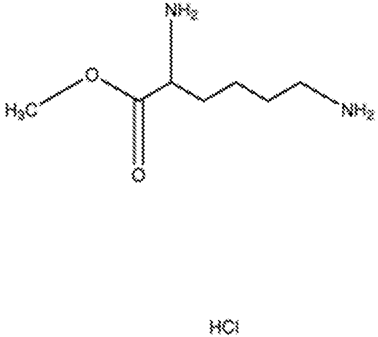 | Lysine methyl ester |
| 78 | 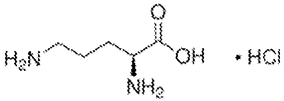 | Ornithine |
| 79 | 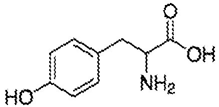 | Tyrosine |
| 80 | 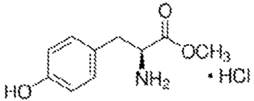 | L-Tyrosine methyl ester |
| 81 | 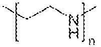 | Polyethylenimine, linear |
| 82 | 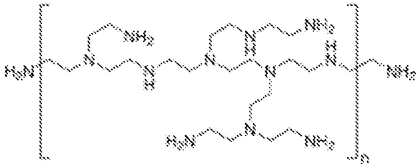 | Polyethylenimine, branched |
| 83 | 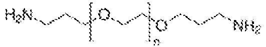 | Poly(ethylene glycol) bis(3-aminopropyl) terminated |
| 84 | 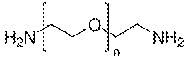 | Poly(ethylene glycol) bis(amine) |
| 85 | 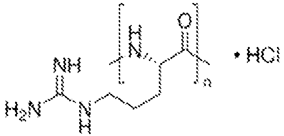 | Poly-L-arginine hydrochloride |
| 86 | 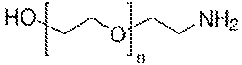 | (2-aminoethyl)polyethylene glycol |
| 87 | 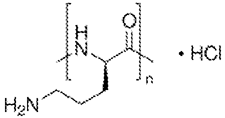 | Polylysine hydrochloride |

As discussed above, the method of the present invention has the distinct advantage that the silicone surface to be treated according to the invention does not need to be pre-treated with an oxidizing agent such as ozone, hydrogen peroxide, or plasma treatment prior to the treatment with the reagent with the method of the invention. This makes the method of the invention much simpler than prior art methods for modifying silicone surfaces discussed above in the Background section. This applies to any reagent that may be selected, but in particular, when a silanization reagent as defined above is selected no pre-oxidation step is applied. When other reagents are used, a pre-oxidation step may or may not be applied but is, as mentioned, not necessary.

Also, pre-treatment with strong alkali, such as NaOH, KOH, LiOH, BaOH, NH₄OH, and CaOH₂ can be omitted and is omitted in preferred embodiments.

The method can advantageously be performed by use of any of a variety of common solvents or a mixture of solvents. It is an advantage of the invention that non-hazardous environmentally benign solvents can readily be used, such as common alcohol solvents (solvents that are not highly toxic or serious carcinogens and not hazardous to the environment when discarded). In some embodiments, an organic solvent is used, which may be selected from but is not limited to diethylene glycol, diethyl ether, diethylene glycol, dimethyl ether, methyl t-butyl ether (MTBE), tetrahydrofuran (THF), dimethylformamide (DMF), N-methyl-2-pyrrolidone (NMP), dimethyl sulfoxide (DMSO), ethylene glycol, ethanol, propanol, isopropanol, 1-butanol, 2-butanol, t-butyl alcohol ethyl acetate, and acetone. Alternatively, water or an aqueous solution can be used or a miscible solution of water and one or more organic solvents. In these embodiments, the silicone surface to be treated is placed in the solvent and the reagent is mixed in the solvent. Tests have shown that the method can be successfully operated at ambient room temperature but higher temperatures can be advantageous in some embodiments for faster reaction. After a period of time the treated silicon surface is preferably rinsed, preferably with the same solvent used for the reaction or another solvent and preferably with water or an aqueous solution or non-toxic alcohol other environmentally benign solvents.

In embodiments where a gas phase reagent is used the silicon surface is placed in suitable contained atmosphere which in some embodiments is air but in other embodiments an inert atmosphere such as nitrogen, ad the reagent is injected or leaked into the contained atmosphere.

Applicable reaction conditions vary according to the specific reagent and solvent selected and can be suitably optimized. Thus in some embodiments the reaction can be performed at ambient room temperature (about 20-25°C), in other embodiments the reaction is performed at a temperature in the range of about 10°-100°C, such as a range from about 10°, or from about 15°, or from about 20°, or from about 25° or from about 30°, to about 100°, or to about 90° or to about 70° or more preferably to about 50° or to about 40°C. In some embodiments, using the applicable solvent(s), is is useful to apply lower temperature and thus the reaction may take place at a temperature in the range of about -30° to about 10°C.

The reaction may also be aided by application of ultrasound and/or microwave heating.

The obtained surface-modified silicone with reactive amino groups can advantageously be further modified to obtain silicone with desired modified properties. Thus, in some embodiments the method of the invention includes further steps of modifying further the silicone surfaces. In one embodiment the method comprises a step of treating the silicone surface with diazo transfer reagent (sometimes referred to as azide-transfer reagent) to convert at least some of said introduced amino groups to azide groups. These azide groups can then be selectively reacted with alkynes in a 1,3-dipolar cycloaddition (i.e. "click reaction") to give 1,2,3-triazole derivatives (see e.g. US9302997B2). Such 1,3-dipolar cycloadditions have been used to covalently link alkyne derivatives of various bioactive molecules, such as proteins, peptides, biotin and polymers to surfaces (Escorihuela et al. Adv. Mater. Interfaces 2015, 2, 1500135 - https://doi.org/10.1002/ admi.201500135). Accordingly, in some embodiments of the method, the silicone surface, after having been reacted with a selected azide-transfer reagent, is reacted with a selected desired molecule that binds via 1,3-dipolar cycloaddition to the introduced azide groups. The diazo transfer reagent may be selected from but is not limited to imidazole-1-sulfonyl azide, triflyl azide, azidotrimethylsilane and sodium azide. The molecule which is bound in this way may be selected from but is not limited to a peptide, protein, biotin, a polymer, e.g. PEG, but other reagents are as well applicable.

In another embodiment, the method comprises a step of treating the surface with introduced amino groups with a crosslinker which is preferably selected from but is not limited to glutaraldehyde, ethylene glycol dimethacrylate, genepin, tannic acid, and polyethylene glycol diglycidyl ether. After the selected crosslinker has been reacted with the modified surface, with methods that are such well known in the art, then a desired a biopolymer can be linekd thereto, or other polymer, peptide, protein or another bioactive molecule were nucleophilic reactive groups are present in the structure. Thus such surface of the invention with introduced crosslinker can be reacted to, for example, synthetic polymer (e.g. PEG), protein, peptide, carbohydrate, a small bioactive molecule, such as but not limited to a bioactive drug molecule, a cytokine or hormone, to name just a few.

The methods of the invention introduce amino groups to the accessible surface on the treated silicone. The exact structure and nature of the association of the amino groups to the silicone has yet to be elucidated and is being investigated by the inventors; the tests included in the below examples demonstrate that significant activity remains after extensive washing, indicating covalent association, though non-covalent association may also play a role.

An aspect of the invention provides silicone objects with modified surface obtained with the above described methods. Such objects of the invention can be produced and provided commercially for subsequent use as useful intermediate products, or silicone objects can be treated with the methods of the invention and further modified by subsequent steps to bind thereto selected useful moieties, as described above. Thus, the present invention as well encompasses silicone objects obtainable with the methods of the invention, where one or more molecule has been bound (preferably covalently) to at least some of the amino groups introduced on the silicone surface. Such molecule can comprise but is not limited to any of the above mentioned, e.g. synthetic polymer, protein, peptide, carbohydrate, and small bioactive molecule, such as but not limited to a bioactive drug molecule, a cytokine or hormone, or any combination of one or more of these.

Throughout the description and claims, the terms "comprise", "including", "having", and "contain" and their variations should be understood as meaning "including but not limited to", and are not intended to exclude other components.

The term "at least one" should be understood as meaning "one or more", and therefore includes both embodiments that include one or multiple components. Furthermore, dependent claims that refer to independent claims that describe features with "at least one" have the same meaning, both when the feature is referred to as "the" and "the at least one".

It will be appreciated that variations to the foregoing embodiments of the invention can be made while still falling within the scope of the invention can be made while still falling within the scope of the invention which is defined by the claims. Features disclosed in the specification, unless stated otherwise, can be replaced by alternative features serving the same, equivalent or similar purpose. Thus, unless stated otherwise, each feature disclosed represents one example of a generic series of equivalent or similar features.

Use of exemplary language, such as "for instance", "such as", "for example" and the like, is merely intended to better illustrate the invention and does not indicate a limitation on the scope of the invention unless so claimed. Any steps described in the specification may be performed in any order or simultaneously, unless the context clearly indicates otherwise.

### DESCRIPTION OF FIGURES

Figure 1: Calibration curve for ninhydrin assay to quantify free amino groups (-NH₂) in sample.
Figure 2: Shows influence of reaction time for three steps of surface modification. A: APTMS; B: Glutaraldehyde; and C: Chitosan.
Figure 3: FT-IR spectra for untreated silicone (F), Chitosan coated silicone (G), and Chitosan (H).
Figure 4: Samples at various steps; A: Untreated silicone after ninhydrin test, B: After 2-hour long silanization with 2% APTMS, C: After 24-hour Treatment with 2% APTMS, D: APTMS treated silicone after ninhydrin test, E: after APTMS treatment and Glutaraldehyde treatment, F: Chitosan coating (after APTMS and Glutaraldehyde treatment).
Figure 5: Influence of washing with different solvents on the ninhydrin response of silicone samples treated with 2% APTMS.
Figure 6: FTIR spectra of silicon samples that were reacted with APTMS, then with azide reagent and finally suvjected to cycloaddition reaction (see Example 6).

### EXAMPLES

### Example 1. Silicone samples, Ninhydrin assay and FT-IR

### 1-1 Silicone samples

Medical silicone elastomer sheets from NuSil Technology (MED82-5010-80 and MED82-5010-40) were used in the experiment. Circular discs of silicone were cut from the sheets with a hollow puncher to give samples with a 1.2 cm diameter and 0.2 cm (thin discs) or 0.4 cm (thick discs) thickness and a 3.0 cm² or 3.8 cm² total surface area, respectively. The weight of the thin disc samples was 0.14 g, and the weight of the thick disc samples was 0.26 g. The thin discs were used, and they were immersed in acetone and ultrasonicated for 30 minutes to remove all surface contamination, rinsed with deionized water, and dried in an 80°C oven before use unless otherwise stated.

In a second set of experiments we made 2 mm thick silicone sheet by pouring a silicone blend made from two types of liquid silicone, one containing the catalyst and the other the crosslinker and cure inhibitor, into a mold and heating the mold at 100°C to cure the silicone into an elastomer. Three types of silicone membranes were made with different stiffness (shore OO) referred to as A (CF1350), B (CF15) and C (CF13).

### 1-2 Ninhydrin assay

Ninhydrin reagent used to quantify free amino groups (-NH₂) in the sample:
Lithium acetate dihydrate was dissolved in deionized water, pH adjusted to 5.2 with glacial acetic acid to obtain 4M lithium acetate buffer solution. Ninhydrin (1.0g) and hydrindantin (0.15 g) were weighed directly into a round bottom flask and dissolved in DMSO (37.5 ml). This flask was then stoppered with a septum. A syringe attached to a nitrogen balloon was inserted through the septum into the solution, and the oxygen was flushed out by inserting another syringe into the septum. 12,5 ml of the 4M lithium acetate buffer solution was then added, and the solution was flushed again with nitrogen.

1-3 Calibration of the ninhydrin assay with glucosamine hydrochloride.

25 mL of CH₃COOH/H₂O (1:250 v/v) solution was prepared by adding 0.1 ml of CH₃COOH to 25 mL of H₂O. Then 0.25 gr of chitosan was added to the solution and stir the solution with a magnetic stirrer until the chitosan is completely dissolved to make a stock solution with a concentration of 1 mg/ml. Then, the stock solution was used to prepare six standard solutions with the specified concentrations: 15.62 µg/ml, 31.25 µg/ml, 62.5 µg/ml, 125 µg/ml, 250 µg/ml, and 500 µg/ml.

The similar process was also performed to prepare glucosamine standard solution.

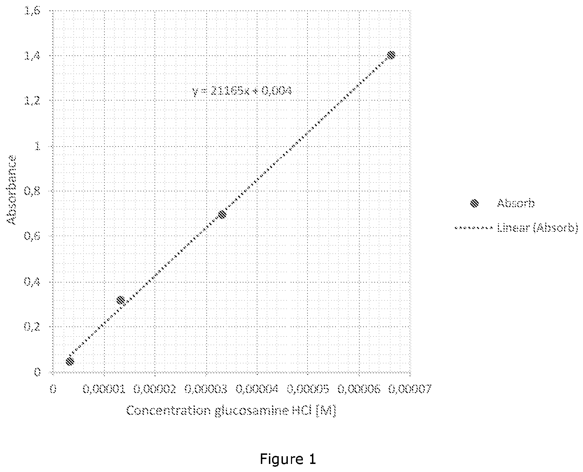

A blank was made by mixing 1 ml of deionized water with 1 ml of ninhydrin reagent. The test tubes were then heated in a water bath (90°C) for 30 minutes to complete the reaction. After cooling in another water bath, the solution was diluted with 5 ml of 50% (v/v) EtOH/H₂O mixture to give a 7 ml final volume. These solutions were vortexed again for 15 sec each in order to oxidize the excess of hydrindantin. The absorbance at 570 nm was measured with a UV-vis spectrophotometer (GENESYS 150). The results used to make a calibration curve (Figure 1).

Table 5. data for calibration of the Ninhydring assay

**Table 5**

| **Glucosamine standard conc. [µg/ml]** | Absorbance 570 nm [O.D.] |
|---|---|
| 15.6 | 0.0465 |
| 31.25 | 0.1443 |
| 62.5 | 0.2433 |
| 125 | 0.4353 |
| 250 | 0.8527 |
| 500 | 1.73 |

| | |
|---|---|
| (The molecular weight of glucosamine hydrochloride used in the calculation is 215.63 g/mol) | |

### 1-4 Ninhydrin assay of silicone disc samples to quantify amino groups

Treated discs or untreated discs were inserted into test tubes containing 1 ml of the ninhydrin reagent and 1 ml of water. The test tubes were heated in a water bath (90°C) for 30 minutes to complete the ninhydrin reaction. The discs were then removed, the solutions cooled and then diluted with 5 ml of 50% (v/v) ethanol/water mixture to give a 7 ml final volume. The absorbance of the diluted solutions was measured in a 1 cm pathlength cuvette with a UV spectrophotometer. In the case of a strong response (absorbance >, 1-2 ), the solutions were further diluted with 50% (v/v) ethanol/water to allow measurements in the optimal 0-2 absorbance range.

### 1-5 FT-IR

The surface functionalization and coatings were investigated with Nicolet iZ10 FT-IR spectrophotometer (Thermo scientific) in reflection mode, and the spectra were analyzed with OMNIC software.

### Example 2. Silicone treatment with ATPMS in Toluene, glutaraldehyde crosslinking and coating with chitosan (not part of the invention)

### 2-1 Treatment ATPMS dissolved in Toluene

In this experiment, 1%, 2%, and 4% solutions of 3-Aminopropyl)trimethoxysilane (APTMS) were prepared by adding 0.5, 1, and 2 mL of APTMS to 49.5, 49, and 48 mL of toluene, respectively.

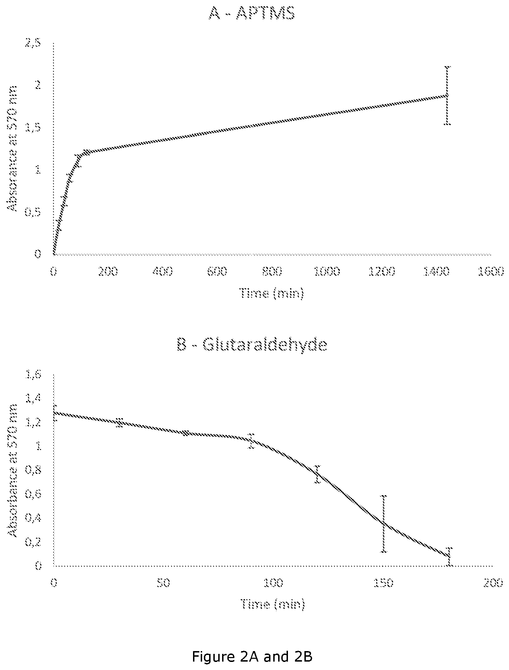

1 ml of (3-Aminopropyl)trimethoxysilane (APTMS) was diluted in 50 ml toluene to obtain 2% APTMS solution. Thin silicone discs were threaded with 19G BD microlance syringe needles to weigh them down to allow full immersion into the APTMS solution. The discs were then immersed in the APTMS solution in an Erlenmeyer flask, and the solution was stirred with a magnetic stirrer. The discs were removed after set treatment time (20 min., 40 min., 1 h, 1,5 h, 2 h, or 24 h), thoroughly rinsed with water, and then washed 6 times on each side using a transfer pipette to remove any excess reagent. This was followed by drying in an oven (80°C) for 2 hours. The response to ninhydrin increased with up to 24 hours (Figure 2-A). However, such a long reaction time also had a negative impact on the properties of the silicone material. The treated discs became white and brittle after a 24-hour reaction, indicating substantial covalent crosslinking. The 2-hour reaction was therefore considered optimal as the response in the ninhydrin assay was about 65% of the 24-hour response. No effect on the silicone material properties could be observed with 2 h treatment.

### 2-2 ATPMS treated silicone with glutaraldehyde crosslinker.

Silicone discs treated with 2% APTMS solution in toluene for 2 hours and rinsed were immersed in a 25% glutaraldehyde solution in H2O, which was stirred occasionally. The discs were removed from the solution after 20 min, 40 min, 1 hour, 1.5 hours, 2 hours, or 3 hours and washed 4 times on each side with methanol using a transfer pipette and air-dried overnight. The sheets were analyzed by FT-IR and ninhydrin tests. All tests were carried out in triplicate. Prior to the coating of amino-functionalized silicone with chitosan, the samples must be treated with a suitable crosslinker that can react with the amino groups on the silicone surface and the polysaccharide. Glutaraldehyde is a crosslinker that reacts readily with primary amino groups to form an imine. The imines can then be reduced to form stable dialkyl amines. The reagent blocks amino groups on the surface of the silicone, so the response to the ninhydrin test should decrease as the reaction processes. The ninhydrin response of the samples decreased with increasing reaction time in the glutaraldehyde solution due to the conversion of the amino groups to an imine. After 3 hours of reaction, there was almost no response to the ninhydrin test. The crosslinking reaction was therefore almost total after 3 hours of crosslinking (Figure 2-B).

### 2-3 Treatment of ATPMS and glutaraldehyde treated silicone with chitosan.

Silicone discs that had been treated with 2% APTMS solution in toluene for 2 hours and rinsed, were immersed in a 25% glutaraldehyde solution as previously described, were immersed a 2% (v/v) acetic acid/H₂O solution containing 0.04 g/ml chitosan and 0.001g/ml NaBH₄, for 2min, 40 min, 1 hour, 1.5 hour or 2 hours. This was done at room temperature with occasional stirring with the needle. Then removed from the solution and rinsed thoroughly by immersing them in deionized water and washed 10 times on each side using a plastic pipette containing the same solvent and dried in an oven (80°C) for 1 hour. The sheets were analyzed by FT-IR and ninhydrin tests. All tests were carried out in triplicate.

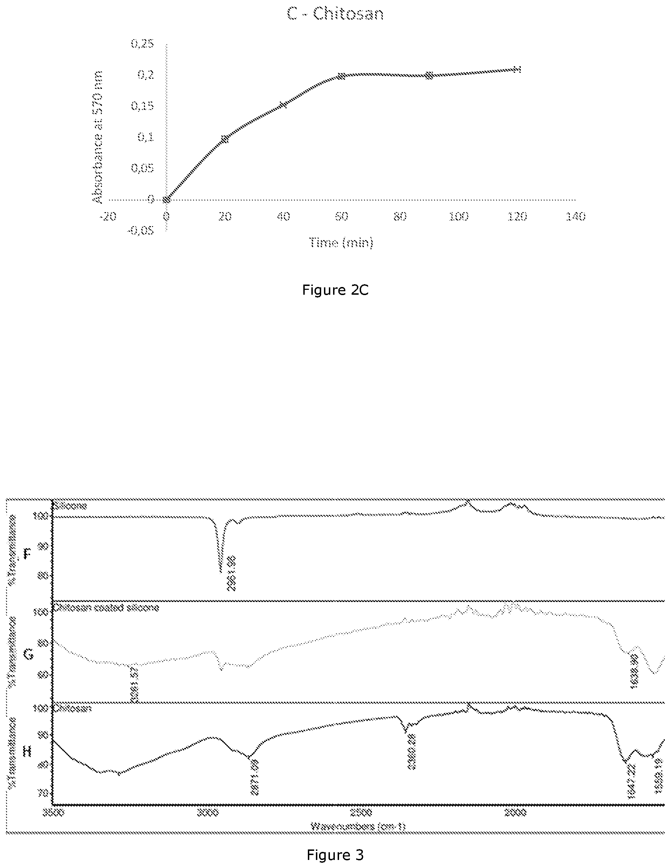

The chitosan polymer chain contains many amino groups (-NH₂), and the response in the ninhydrin test should increase again as glutaraldehyde treated silicone samples have been immersed in chitosan solutions. An increase in the ninhydrin response was observed (Figure 2-C). The response grew rapidly in the first hour but slowed and was approaching a plateau in 2 hours. The samples were diluted 10-fold after the ninhydring reaction to get significant measurements and to fit within the calibration curve.

Figure 2 shows the influence of reaction time on the response in the ninhydrin assay for all three steps of coating. A: APTMS, B: Glutaraldehyde and C: Chitosan. All measurements were done in triplicate and the standard error error bars are shown. The ninhydrin reagent was diluted 7-fold (to 7 ml) after the ninhydrin testing of APTMS treated discs (A) and glutaraldehyde treated discs (B) after the ninhydrin assay. The reagent was diluted 70-fold (first to 7 ml and then 10-fold) following the ninhydrin reaction of chitosan treated discs so that the measured absorbance could fit within the calibration curve.

### 2-4 FT-IR results.

Untreated silicone discs were measured to identify characteristic peaks that could be compared with spectra of treated silicone. The characteristic silicone peak at 2961 cm-1 (CH₃ stretch) was observed in the untreated silicone sample (Figure 3-F). Additional peaks could be observed in the spectra of chitosan-coated silicone, and these were similar to peaks observed in the spectra of pure chitosan. The characteristic peaks for chitosan were as followed: 3292 cm⁻¹ (N-H and C-H stretch), 2871 cm⁻¹ (CH₃ symmetric stretch), 1647 cm⁻¹ (C=O stretch) and 1375 cm⁻¹ (C-N stretch) (Figure 3-H) The characteristic peak for chitosan-coated silicone (Figure-3G) similar to chitosan were as follows 3262 cm⁻¹ (N-H and C-H stretch), 2961 cm⁻¹ (CH₃ symmetric stretch), 1558 cm⁻¹ (C=O stretch) and 1402.52 cm⁻¹ (C-N stretch).

Figure 3 shows FT-IR spectra for F: untreated silicone. G: Chitosan coated silicone and H: Chitosan.

### 2-3 Visual analysis

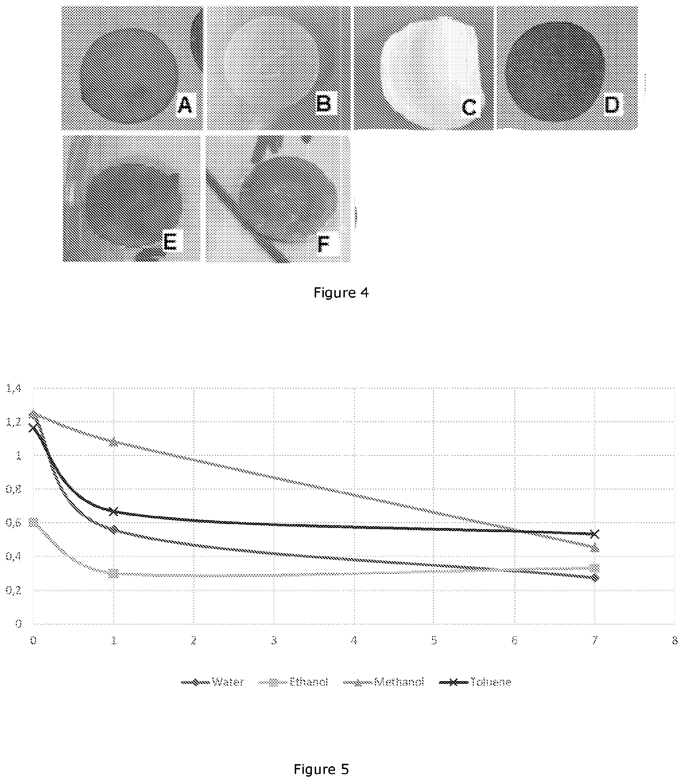

Digital images showed the appearance of the silicone discs samples after different treatments. Untreated silicone has an opaque grayish color and becomes dark after treatment with the ninhydrin reagent (Figure 4-A). There is no change in the visual appearance after 2 h treatment with 2% APTMS solution (Figure 4-B), but after 24-treatment, the sample has turned white and brittle (Figure 4-C). Discs that have been treated for 2 h with 2% APTMS turn blue after treatment with the ninhydrin reagent (Figure 4-D). The APTMS treated discs turn brownishorange after treatment with glutaraldehyde (Figure 4-E) and more reddish after the treatment with chitosan.

Results are shown in Figure 4, showing A: Untreated silicone after ninhydrin test, B: After 2-hour long silanization with 2% APTMS, C: After 24-hour Treatment with 2% APTMS, D: APTMS treated silicone after ninhydrin test, E: Glutaraldehyde treatment, F: Chitosan coating.

### Example 3. Stability of amino group modification of silicone.

Silicone disc samples that had been treated 2% APTMS for 2 h were washed thoroughly with different solvents to try to extract the reagent that was not firmly (covalently) attached to the silicone (Figure 5). The ninhydrin response was similar (~ 1.2) when the initial washing was done with water, methanol, and toluene but was initially 50% less (~0.6) when then initial washing was done with ethanol. Extensive washing up to one week further reduced the ninhydrin response, but this was mostly in the first 24h, and there was a limited reduction in further one-week washing. The samples were also heated in water (90°C) for 20 minutes after washing with different solvents. The heating caused a reduction of about 50% of the initial response for all samples.

Figure 5 shows the influence of washing with different solvents on the ninhydrin response of silicone samples treated with 2% APTMS. Y-scale shows absorbance at 570 nm, X-scale time in units of days.

### Example 4. Silicone treatment with pure APTMS and different solutions of APTMS (not part of the invention).

Procedure for toluene solutions. The silicone discs were immersed in the 2% (v/v) ATPMS in toluene standard solutions for 20 min at room temperature. Subsequently, the discs were thoroughly rinsed with anhydrous toluene to remove excess reagent residues. The silicone samples were then heated in an oven (80°C) to dry, and a ninhydrin assay was performed as described in example 1.

Procedure for deionized water solutions: The samples were immersed in 5% APTMS (heated at the temperature of 85°C) solution for 5 or 30 minutes and dried with nitrogen gas. Then the samples are kept at 65°C for 10 minutes.

Proceudure for pure APTMS liquid. The silicone samples are immersed for 5 min into 97% APTMS, then washed in deionized water and dried in an oven at 80°C.

Procedures for ethanol and ethyl acetate solutions: An anhydrous solution is prepared by mixing APTMS and anhydrous ethanol or ethyl acetate to obtain a 1% solution. The solution was stirred for 10 min under nitrogen at room temperature. The silicone discs were then placed in the solution under nitrogen at room temperature. After 20 min, the substrates are washed with ethanol and blown dry with nitrogen. Results are shown in Table 6.

**Table 6. Results of treatment with APTMS in different solvents and pure APTMS**

| Treatment solution | Treatment time | Dilution of ninhydrin reagent | Absorbance | Average absorbance | µmol -NH2 per disc* |
|---|---|---|---|---|---|
| 2% APTMS in Toluene | 20 min | 7 | 0.459 | 0.447 | 152 |
| | | | 0.475 | | |
| | | | 0.407 | | |
| 1% APTMS in ethanol | 10 min | 7 | 0.075 | 0.162 | 25 |
| | | | 0.206 | | |
| | | | 0.206 | | |
| 5% APTMS in water | 5 min | 7 | 0.110 | 0.073 | 36 |
| | | | 0.037 | | |
| | | | 0.071 | | |
| 5% APTMS in water | 30 min | 7 | 0.074 | 0.083 | 24 |
| | | | 0.082 | | |
| | | | 0.092 | | |
| Pure APTMS liquid | 5 min | 7 | 1.474 | 1.306 | 488 |
| | | | 1.263 | | |
| | | | 1.180 | | |
| 5% APTMS in ethyl acetate | 20 min | 7 | 0.231 | 0.235 | 76 |
| | | | 0.239 | | |
| | | | 0.236 | | |

| | | | | | |
|---|---|---|---|---|---|
| *Calculation of the -NH₂ molar quantity is based on the extinction coefficient obtained from the calibration curve equation for glucosamine HCl (Example 1). | | | | | |

### Example 5. Azide transfer reaction and the azide-alkyne cyclo with modified silicone.

Protocol for the azide transfer reaction: Silicone disc samples that had been treated for 2 h with 2% APTMS in toluene were threaded with a syringe needle and immersed in 50 mL of MeOH in a 100 ml round bottom flask. Imidazole sulfonyl azide (50 mg) was then added to the reaction medium during agitation. Following this, 50 mg of K₂CO₃ dissolved in 1 mL deionized water were added and 5.75 mg CuSO₄.5H₂O dissolved in 1 mL deionized water. The flask was stoppered, and the reaction medium stirred for 16h to 20h. Once this reaction time had elapsed, the samples were cleaned with acetone, then with water and again with acetone, and finally dried at room temperature for one hour. FTIR was used to analyze the treated discs. The spectrum of the treated disc was consistent with the introduction of the azide group on the surface as a new peak was observed at 2097 cm⁻¹.

Protocol for the Cycloaddition: 15 mL of DMSO was added to a 25 mL round bottom flask that was fitted with a reflux condenser. Heating was applied until solvent reached is at 50°C. Then the azide functionalized discs (threaded on a needle) were added to the reaction medium which was stirred with a magnetic stirrer. Then 1.5 mg CuSO₄ and 4.7 mg sodium ascorbate are then dissolved in 1 mL deionized water were separately and added to the reaction medium. Finally, 23.3 mg N,N,N-trimethylprop-2-yn-1-aminium was added under a nitrogen atmosphere. The solution was then stirred for 48 h at 50°C. After this time, the samples are removed from the medium and washed with deionized water at least 3 times. The samples were then dried in the open air. The treated discs were analysed by FTIR. Following the cycloaddition reaction the azide peak had disappeared but a new peak in the C-H stretch region could be observed at 2922 cm⁻¹ in the spectrum, consistent with the triazole functionalization.

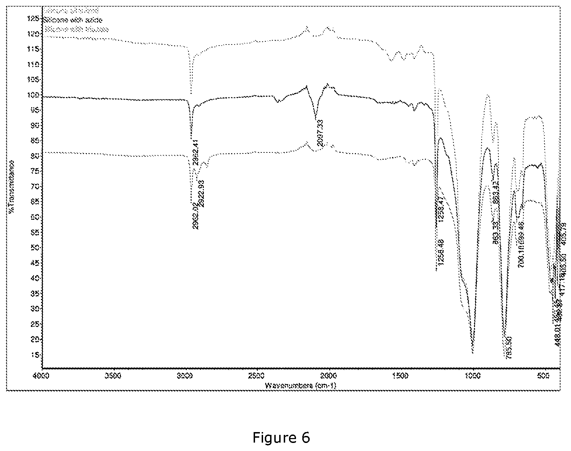

Figure 6 shows FTIR spectra for the study of the azide-alkyne cycloaddition reaction.

### Example 6. Silicone modification with ethanolamine in different solvents. Washing of silicone disks

Silicone discs were cut from a 0.4 cm thick silicone sheets. The silicone disks were soaked in deionized water in an Erlenmeyer flask and shaken. The water washing solution was replaced, and the discs were allowed to soak at room temperature for one hour. This was repeated twice. The discs were finally dried in an 80 °C oven for 2 hours.

Ethanolamine (EA) was mixed with water, isopropanol, ethanol, or ethyl acetate to give treatment solutions with the desired concentration. The discs were soaked in the treatment solutions, which were gently stirred at 1-hour intervals (The thick discs did not float in the solution and thus, it was not necessary to thread them with a needle).

After the reaction, the discs were removed and washed thoroughly 4 times in water (15 minutes total washing time), and then ninhydrin assay was performed as previously described (in example 1).

Results are shown in Table 7.

**Table 7**

| Treatment solution | Treatment time | Dilution of ninhydrin reagent | Absorbance | Average absorbance | µmol -NH2 per disc* |
|---|---|---|---|---|---|
| 50% (v/v) EA in water | 2h | 60 | 0,079 | 0,078 | 224 |
| | | | 0,067 | | |
| | | | 0,089 | | |
| 20% (v/v) EA in isopropanol | 30 min | 60 | 0,158 | 0,154 | 448 |
| | | | 0,174 | | |
| | | | 0,131 | | |
| 20% (v/v) EA in isopropanol | 2h | 60 | 0,288 | 0,290 | 816 |
| | | | 0,276 | | |
| | | | 0,305 | | |
| 20% (v/v) EA in isopropanol | 4h | 60 | 0,335 | 0,329 | 950 |
| | | | 0,331 | | |
| | | | 0,320 | | |
| 20% (v/v) EA in isopropanol | 9h | 60 | 0,513 | 0,463 | 1454 |
| | | | 0,485 | | |
| | | | 0,392 | | |
| 20% (v/v) EA in isopropanol | 24 h | 60 | 0,472 | 0,494 | 1338 |
| | | | 0,560 | | |
| | | | 0,451 | | |
| 20% (v/v) EA in isopropanol | 48 h | 60 | 0,510 | 0,504 | 1446 |
| | | | 0,481 | | |
| | | | 0,520 | | |
| | 2 h | 60 | 0,162 | 0,171 | 459 |
| 20% (v/v) EA in ethanol | | | 0,163 | | |
| | | | 0,187 | | |
| 20% (v/v) EA in ethyl acetate | 2h | 60 | 0,598 | 0,603 | 1695 |
| | | | 0,596 | | |
| | | | 0,615 | | |

| | | | | | |
|---|---|---|---|---|---|
| *Calculation of the -NH₂ molar quantity is based on the extinction coefficient obtained from the calibration curve equation for glucosamine HCl (Example 1). | | | | | |

### Example 7. Silicone modification with APTMS (not part of the invention)

In this example silicon discs from fabricated sheets A, B, C were modified with APTMS. Silicon discs were made by using a 12 mm hollow steel hole punch, washed with deionized water and finally dried in an oven at 80°C. The samples (silicon discs) were added to 50 ml of the APTMS solutions or just solvent (control) and stirred at room temperature for 1 hour. Then the supernatant solution was discarded, and the samples were washed six times with toluene (for this, the appropriate amount of toluene was added to each disc to cover the disc completely (20 mL) and shaken for about 30 seconds, then the solution was replaced with 20 ml of fresh toluene and this was repeated six times). Then the samples were washed with methanol and deionized water respectively 6 times as mentioned above to remove any remaining traces. Finally, the sample was dried in an oven at 80°C and used for ninhydrin assays.

The ninhydrin assay with silicone discs was performed the same way as with the standards for the calibration curve. The discs were immersed in 1 ml water and 1 ml Ninhydrin reagent in a test tube. The test tubes were then heated in a water bath (90°C) for 30 minutes to complete the reaction. The solutions were then diluted with 26 milliliters of 50% (v/v) EtOH/H₂O mixture before the UV measurement. All tests were carried out in triplicate. Results are shown in Table 8.

**Table 8**

| Silicone type | Treatment | Dilution of ninhydrin regent | Absorbance | NH₂ quantity (micromole) | Silicon disc area (cm²) | Quantity NH₂ (micromole/cm²) NH₂ quantity/ disc area |
|---|---|---|---|---|---|---|
| C | Control | 28X | 0.014±0.002 | 14±3 | 3.016 | 5 |
| C | 1% APTMS | 28X | 0.092±0.009 | 117±12 | 3.016 | 40 |
| C | 2% APTMS | 28X | 0.2±0.005 | 262±7 | 3.016 | 89 |
| C | 4% APTMS | 28X | 0.449±0.002 | 594±3 | 3.016 | 203 |
| B | Control | 28X | 0.018±0.006 | 19±8 | 3.016 | 6 |
| B | 1% APTMS | 28X | 0.096±0.002 | 123±2 | 3.016 | 42 |
| B | 2% APTMS | 28X | 0.537±0.003 | 711±33 | 3.016 | 243 |
| B | 4% APTMS | 28X | 0.994±0.02 | 13203±27 | 3.016 | 452 |
| A | Control | 28X | 0.017±0.004 | 17±5 | 3.016 | 6 |
| A | 1% APTMS | 28X | 0.353±0.009 | 466±12 | 3.016 | 160 |
| A | 2% APTMS | 28X | 0.422±0.02 | 558±26 | 3.016 | 191 |
| A | 4% APTMS | 28X | 1.226±0.047 | 1629±62 | 3.016 | 558 |

### Example 8. Silicone modification with DAP (1.3 diaminopropane) EA (Ethanolamine), A12P (3-Amino-1,2-propanediol), 3AP (3-Amino-1-propanol ), and EDA solutions (Ethylenediamine) Isopropanol.

In this experiment, five different reagents were prepared by adding 2.2 mL of DAP, EA, A12P, 3AP, and EDA, respectively, to 20 mL of isopropanol.

Discs were made from the silicon sheets of type A by using 12 mm hollow steel hole puncher as before, and washed 2x with 20 mL of isopropanol and water (30 min) respectively as previously.

The samples (silicon discs) were added to DAP, EA, A12P, 3AP, and EDA solutions separately (3 discs for each treatment) and stirred for 24 hours. Then the supernatant solution was discarded, and the samples were washed two times with Isopropanol, and water, as mentioned previously. Finally, the samples were dried in an oven at 80°C and used for ninhydrin assays.

The ninhydrin assay was done as in example 8 except that the solutions were diluted with 40 mL of 50% (v/v) EtOH/H₂O mixture after the heating. All tests were carried out in triplicate. Results are shown in Table 9.

**Table 9**

| Samples | Dilution of ninhydrin regent | Absorbance | NH2 quantity (micromole) | Silicon disc area (cm2) | Quantity NH2 (micromole/cm2) NH2 quantity/ Silicon disc area |
|---|---|---|---|---|---|
| EA/lsopropanol | 42x | 0.987±0.018 | 1965±38 | 3.016 | 651 |
| DAP/isopropanol | 42x | 0.305±0.004 | 602±9 | 3.016 | 199 |
| 3AP/isopropanol | 42x | 0.620±0.023 | 1232±47 | 3.016 | 409 |
| EDA/isopropanol | 42x | 0.291±0.007 | 573±15 | 3.016 | 190 |
| A12P/Isopropanol | 42x | 0.149±0.002 | 297±5 | 3.016 | 96 |

## Claims

1. A method for modifying a silicone solid surface to introduce amino groups to said surface for making it amenable to further modification, the method comprising treating the silicone elastomer surface with a reagent substance, **characterised in that**
said reagent substance is selected from
- a molecule represented by the formula W(X)-NHR¹ where W is a linear or branched molecule with the structure -((CY¹)ₙ-Z-(CY²)ₘ)₁-, where Y¹ and Y² are independently selected from H, OH, NH₂, alkyl group (CH₂)ₖCH₃, where n,m,l are independently integers from 1 to 10 and k is an integer from 1 to 5, including polyethylenimine, O-(2-Aminoethyl)polyethylene glycol, O,O'-Bis(3-aminopropyl)polyethylene glycol, and Poly-L-ornithine, and Z is selected from -O- and -NH-, and X optionally present but required where Y¹ and Y² are non-nucleophilic groups, and represents OH, COOH, amide, NH₂ or NHR where R is alkyl;
- a molecule represented by the formula W(X)-NHR⁴ where W is a molecule comprising an aromatic structure, X is OH, NH₂ or NHR where R is alkyl, and R⁴ is H or straight or branched alkyl that may be further substituted with amide, benzyl, carbamate, and amine, including 4-aminophenol, 3-aminophenol, 4-aminobenzyl alcohol, 4-aminophenethyl alcohol, 4-hydroxybenzylamine, tyramine, tyrosine, L-tyrosine methyl ester;
- ethanolamine, 2-(ethylamino)ethanol, diethanolamine, 2-amino-1-propanol, 3-methylamino-1-propanol, 3-amino-1,2-propanediol, 2-(methylamino)ethanol, 2-hydroxyethylhydrazine, 3-amino-1-propanol, 2-amino-1,3-propanediol, 3-amino-2-methylpropan-1-ol, 2-(2-aminoethoxy)ethylamine, 3,3'-azanediyldipropan-1-ol, 3-[(2-aminoethyl)amino]-1-propanol, N,N'-bis(2-hydroxyethyl)ethylenediamine, 3-(2-hydroxyethylamino)-1-propanol, ethylenediamine, N-methylethylenediamine, N,N'-diethylethylenediamine, glycinamide, triethylenetetramine, tetraethylenepentamine, N-(2-hydroxyethyl)ethylenediamine, 3-[(2-aminoethyl)amino]-1-propanol, tris(2-aminoethyl)amine, 1,1-diamino-3,6,9-trioxaundecane, 1,3-diaminopropane, 1,3-diamino-2-propanol, 1,2-diaminopropane, 2,2-dimethyl-1,3-propanediamine, 3-aminopropanamide, bis(3-aminopropyl)amine, N,N'-bis(3-aminopropyl)-1,3-propanediamine, N,N'-bis(2-aminoethyl)-1,3-propanediamine, 1,2-bis(3-aminopropylamino)ethane, 1,3-diamino-N-(2-hydroxyethyl)-propane, 3-(3-aminopropoxy)propylamine, tris(3-aminopropyl)amine, 4,9-dioxa-1,12-dodecanediamine, 4-amino-1-butanol, piperazine, 1-(2-hydroxyethyl)piperazine, 4-hydroxypiperidine, 1,4-diaminobutane, spermidine, 2,2'-(ethylenedioxy)-bis(ethylamine), glycine, serine, serine methyl ester, serine ethyl ester, serine isopropyl ester, threonine, threonine methyl ester, lysine, lysine ethyl ester, lysine methyl ester, ornithine, tyrosine, I-tyrosine methyl ester, and oligopeptides of two or more of the mentioned amino acids and/or amino acid derivatives;
and **in that** said reagent substance is optionally dissolved in a solvent and said silicone elastomer surface is placed in said solvent with the dissolved reagent, wherein said solvent is a water-miscible solvent preferably selected from methanol, ethanol, propanol, isopropanol, 1-butanol, 2-butanol, t-butyl alcohol, glycerol, water or an aqueous solution, and any miscible mixture of one or more of these.

2. The method according to claim 1, wherein the silicone surface is not pre-treated with oxidizing agent including ozone, hydrogen peroxide or plasma treatment prior to the treating step.

3. The method according to any of claims 1 or 2, wherein the surface is not pre-treated with a strong alkali such as NaOH, KOH, LiOH, BaOH, NH₄OH, and CaOH₂.

4. The method according to any of the preceding claims, wherein the reagent is dissolved in a solvent and said silicone surface is placed in said solvent with the dissolved reagent or where the reagent is in gaseous form and brought in contact with the silicone surface in a gaseous environment.

5. The method according to any of the preceding claims, further comprising a step of treating the silicone surface with azide-transfer reagent to convert at least some of said introduced amino groups to azide groups.

6. The method according to claim 5, wherein said azide-transfer reagent is selected from Imidazole-1-sulfonyl azide, Triflyl azide, azidotrimethylsilane and sodium azide.

7. The method according to any of the preceding claims further comprising a step of treating the silicone surface with a crosslinker which is preferably selected from glutaraldehyde, ethylene glycol dimethacrylate, genepin, tannic acid, and polyethylene glycol diglycidyl ether.

8. The method according to any of the preceding claims further comprising a step of treating the silicone surface with a bioactive molecule selected from chitosan, a chitosan derivative, an oligopeptide and a protein, to form a bioactive coating.

9. A silicone object with a modified surface comprising reactive amino groups, obtainable with the method of any one of claims 1 to 8.

10. The silicone objectof claim 9, wherein one or more molecule selected from synthetic polymer, protein, peptide, carbohydrate and small bioactive molecule such as antibiotic drug, cytokine or hormone have been bound to at least some of said amino groups introduced on the silicone surface.

11. The silicone object according to claim 9 or 10, wherein the silicone surface is further modified to alter the physicochemical or biological properties, such as making the surface more hydrophilic, more hydrophobic, antimicrobial to resist bacterial colonization and/or more biocompatible.

## Patentansprüche

1. Verfahren zur Modifizierung einer festen Siliconoberfläche, um Aminogruppen auf die Oberfläche einzuführen, damit sie einer weiteren Modifikation zugänglich gemacht wird, wobei das Verfahren Behandeln der Siliconelastomeroberfläche mit einer Reagenzsubstanz umfasst, **dadurch gekennzeichnet, dass**
die Reagenzsubstanz ausgewählt ist aus
- einem Molekül der Formel W(X)-NHR¹, wobei W für ein lineares oder verzweigtes Molekül mit der Struktur - ((CY¹)ₙ-Z-(CY²)ₘ)ₗ- steht, wobei Y¹ und Y² unabhängig aus H, OH, NH₂, Alkylgruppe (CH₂)ₖCH₃ ausgewählt sind, wobei n, m, 1 unabhängig jeweils für eine ganze Zahl von 1 bis 10 stehen und k für eine ganze Zahl von 1 bis 5 steht, einschließlich Polyethylenimin, O-(2-Aminoethyl)polyethylenglykol, O,O'-Bis(3-aminopropyl)polyethylenglykol und Poly-L-Ornithin, und Z aus -O- und -NH- ausgewählt ist und X gegebenenfalls vorhanden ist, aber erforderlich ist, wo Y¹ und Y² nichtnukleophile Gruppen sind, und für OH, COOH, Amid, NH₂ oder NHR steht, wobei R für Alkyl steht;
- einem Molekül der Formel W(X)-NHR⁴, wobei W für ein Molekül steht, das eine aromatische Struktur umfasst, X für OH, NH₂ oder NHR steht, wobei R für Alkyl steht und R⁴ für H oder geradkettiges oder verzweigtes Alkyl steht, das weiter mit Amid, Benzyl, Carbamat und Amin substituiert sein kann, einschließlich 4-Aminophenol, 3-Aminophenol, 4-Aminobenzylalkohol, 4-Aminophenethylalkohol, 4-Hydroxybenzylamin, Tyramin, Tyrosin, L-Tyrosinmethylester;
- Ethanolamin, 2-(Ethylamino)ethanol, Diethanolamin, 2-Amino-1-propanol, 3-Methylamino-1-propanol, 3-Amino-1,2-propandiol, 2-(Methylamino)ethanol, 2-Hydroxyethylhydrazin, 3-Amino-1-propanol, 2-Amino-1,3-propandiol, 3-Amino-2-methylpropan-1-ol, 2-(2-Aminoethoxy)ethylamin, 3,3'-Azandiyldipropan-1-ol, 3-[(2-Aminoethyl)amino]-1-propanol, N,N'-Bis(2-hydroxyethyl)ethylendiamin, 3-(2-Hydroxyethylamino)-1-propanol, Ethylendiamin, N-Methylethylendiamin, N,N'-Diethylethylendiamin, Glycinamid, Triethylentetramin, Tetraethylenpentamin, N-(2-Hydroxyethyl)ethylendiamin, 3-[(2-Aminoethyl)amino]-1-propanol, Tris(2-aminoethyl)amin, 1,1-Diamino-3,6,9-trioxaundecan, 1,3-Diaminopropan, 1,3-Diamino-2-propanol, 1,2-Diaminopropan, 2,2-Dimethyl-1,3-propandiamin, 3-Aminopropanamid, Bis(3-aminopropyl)amin, N,N'-Bis(3-aminopropyl)-1,3-propandiamin, N,N'-Bis(2-aminoethyl)-1,3-propandiamin, 1,2-Bis(3-aminopropylamino)ethan, 1,3-Diamino-N-(2-hydroxyethyl)propan, 3-(3-Aminopropoxy)propylamin, Tris(3-aminopropyl)amin, 4,9-Dioxa-1,12-dodecandiamin, 4-Amino-1-butanol, Piperazin, 1-(2-Hydroxyethyl)piperazin, 4-Hydroxypiperidin, 1,4-Diaminobutan, Spermidin, 2,2'-(Ethylendioxy)-bis(ethylamin), Glycin, Serin, Serinmethylester, Serinethylester, Serinisopropylester, Threonin, Threoninmethylester, Lysin, Lysinethylester, Lysinmethylester, Ornithin, Tyrosin, 1-Tyrosinmethylester und Oligopeptiden von zwei oder mehr der genannten Aminosäuren und/oder Aminosäurederivate;
und dass die Reagenzsubstanz gegebenenfalls in einem Lösungsmittel gelöst ist und die Siliconelastomeroberfläche in das Lösungsmittel mit dem gelösten Reagenz in das Lösungsmittel gesetzt wird, wobei es sich bei dem Lösungsmittel um ein mit Wasser mischbares Lösungsmittel handelt, das vorzugsweise aus Methanol, Ethanol, Propanol, Isopropanol, 1-Butanol, 2-Butanol, t-Butylalkohol, Glycerin, Wasser oder einer wässrigen Lösung sowie irgendeinem mischbaren Gemisch von einem oder mehreren davon ausgewählt ist.

2. Verfahren nach Anspruch 1, wobei die Siliconoberfläche vor dem Behandlungsschritt nicht mit Oxidationsmittel, einschließlich Ozon, Wasserstoffperoxid oder Plasmabehandlung, vorbehandelt wird.

3. Verfahren nach Anspruch 1 oder Anspruch 2, wobei die Oberfläche nicht mit einem starken Alkali wie NaOH, KOH, LiOH, BaOH, NH₄OH und CaOH₂ vorbehandelt ist.

4. Verfahren nach einem der vorhergehenden Ansprüche, wobei das Reagenz in einem Lösungsmittel gelöst wird und die Siliconoberfläche in das Lösungsmittel mit dem gelösten Reagenz gesetzt wird oder wobei das Reagenz in gasförmiger Form vorliegt und in einem gasförmigen Milieu mit der Siliconoberfläche in Kontakt gebracht wird.

5. Verfahren nach einem der vorhergehenden Ansprüche, ferner umfassend einen Schritt, bei dem die Siliconoberfläche mit Azid-Transfer-Reagenz behandelt wird, so dass wenigstens einige der eingeführten Aminogruppen in Azidgruppen überführt werden.

6. Verfahren nach Anspruch 5, wobei das Azid-Transfer-Reagenz aus Imidazol-1-sulfonylazid, Triflylazid, Azidotrimethylsilan und Natriumazid ausgewählt ist.

7. Verfahren nach einem der vorhergehenden Ansprüche, ferner umfassend einen Schritt, bei dem die Siliconoberfläche mit einem Vernetzer behandelt wird, der vorzugsweise aus Glutaraldehyd, Ethylenglykoldimethacrylat, Genepin, Tanninsäure und Polyethylenglykoldiglycidylether ausgewählt ist.

8. Verfahren nach einem der vorhergehenden Ansprüche, ferner umfassend einen Schritt, bei dem die Siliconoberfläche mit einem bioaktiven Molekül, das aus Chitosan, einem Chitosanderivat, einem Oligopeptid und einem Protein ausgewählt ist, unter Bildung einer bioaktiven Beschichtung behandelt wird.

9. Silicongegenstand mit einer modifizierten Oberfläche, die reaktive Aminogruppen umfasst, erhältlich mit dem Verfahren nach einem der Ansprüche 1 bis 8.

10. Silicongegenstand nach Anspruch 9, wobei ein oder mehrere Moleküle, ausgewählt aus synthetischem Polymer, Protein, Peptid, Kohlenhydrat und kleinem bioaktiven Molekül wie Antibiotikum, Cytokin oder Hormon, an wenigstens einige der auf der Siliconoberfläche eingeführten Aminogruppen gebunden wurden.

11. Silicongegenstand nach Anspruch 9 oder 10, wobei die Siliconoberfläche zur Veränderung der physikochemischen oder biologischen Eigenschaften weiter modifiziert wird, wie etwa die Oberfläche hydrophiler, hydrophober, antimikrobieller zum Widerstehen bakterieller Besiedlung und/oder biokompatibler gemacht wird.

## Revendications

1. Procédé pour modifier une surface solide de silicone pour introduire des groupes amino sur ladite surface afin de la rendre susceptible d'être modifiée ultérieurement, le procédé comprenant le traitement de la surface d'élastomère de silicone avec une substance réactive, **caractérisé en ce que**
ladite substance réactive est choisie parmi
- une molécule représentée par la formule W(X)-NHR¹ où W est une molécule linéaire ou ramifiée comportant la structure - ((CY¹)ₙ-Z-(CY²)ₘ)ₗ-, où Y¹ et Y² sont indépendamment choisis parmi H, OH, NH₂, groupe alkyle (CH₂)ₖCH₃, où n, m, 1 sont indépendamment des entiers de 1 à 10 et k est un entier de 1 à 5, y compris polyéthylèneimine, O-(2-Aminoéthyl)polyéthylène glycol, O,O'-Bis(3-aminopropyl)polyéthylène glycol, et Poly-L-ornithine, et Z est choisi parmi -O- et -NH-, et X éventuellement présent mais requis où Y¹ et Y² sont des groupes non nucléophiles, et représente OH, COOH, amide, NH₂ ou NHR où R est alkyle ;
- une molécule représentée par la formule W(X)-NHR⁴ où W est une molécule comprenant une structure aromatique, X est OH, NH₂ ou NHR où R est alkyle, et R⁴ est H ou alkyle linéaire ou ramifié qui peut être en outre substitué par amide, benzyle, carbamate, et amine, y compris 4-aminophénol, 3-aminophénol, alcool 4-aminobenzylique, alcool 4-aminophénéthylique, 4-hydroxybenzylamine, tyramine, tyrosine, ester méthylique de L-tyrosine ;
- éthanolamine, 2-(éthylamino)éthanol, diéthanolamine, 2-amino-1-propanol, 3-méthylamino-1-propanol, 3-amino-1,2-propanediol, 2-(méthylamino)éthanol, 2-hydroxyéthylhydrazine, 3-amino-1-propanol, 2-amino-1,3-propanediol, 3-amino-2-méthylpropan-1-ol, 2-(2-aminoéthoxy)éthylamine, 3,3'-azanediyldipropan-1-ol, 3-[(2-aminoéthyl)amino]-1-propanol, N,N'-bis(2-hydroxyéthyl)éthylènediamine, 3-(2-hydroxyéthylamino)-1-propanol, éthylènediamine, N-méthyléthylènediamine, N,N'-diéthyléthylènediamine, glycinamide, triéthylènetétramine, tétraéthylènepentamine, N-(2-hydroxyéthyl)éthylènediamine, 3-[(2-aminoéthyl)amino]-1-propanol, tris(2-aminoéthyl)amine, 1,1-diamino-3,6,9-trioxaundécane, 1,3-diaminopropane, 1,3-diamino-2-propanol, 1,2-diaminopropane, 2,2-diméthyl-1,3-propanediamine, 3-aminopropanamide, bis(3-aminopropyl)amine, N,N'-bis(3-aminopropyl)-1,3-propanediamine, N,N'-bis(2-aminoéthyl)-1,3-propanediamine, 1,2-bis(3-aminopropylamino)éthane, 1,3-diamino-N-(2-hydroxyéthyl)-propane, 3-(3-aminopropoxy)propylamine, tris(3-aminopropyl)amine, 4,9-dioxa-1,12-dodécanediamine, 4-amino-1-butanol, pipérazine, 1-(2-hydroxyéthyl)pipérazine, 4-hydroxypipéridine, 1,4-diaminobutane, spermidine, 2,2'-(éthylènedioxy)-bis(éthylamine), glycine, sérine, ester méthylique de sérine, ester éthylique de sérine, ester isopropylique de sérine, thréonine, ester méthylique de thréonine, lysine, ester éthylique de lysine, ester méthylique de lysine, ornithine, tyrosine, ester méthylique de L-tyrosine et oligopeptides de deux ou plus des acides aminés et/ou dérivés d'acides aminés mentionnés ;
et **en ce que** ladite substance réactive est éventuellement dissoute dans un solvant et ladite surface d'élastomère de silicone est placée dans ledit solvant avec le réactif dissous, ledit solvant étant un solvant miscible à l'eau choisi de préférence parmi le méthanol, l'éthanol, le propanol, l'isopropanol, le 1-butanol, le 2-butanol, l'alcool t-butylique, le glycérol, l'eau ou une solution aqueuse, et tout mélange miscible d'un ou plusieurs de ceux-ci.

2. Procédé selon la revendication 1, dans lequel la surface de silicone n'est pas prétraitée par un agent oxydant comprenant l'ozone, le peroxyde d'hydrogène ou un traitement par plasma avant l'étape de traitement.

3. Procédé selon l'une quelconque des revendications 1 et 2, dans lequel la surface n'est pas prétraitée par un alcali fort tel que NaOH, KOH, LiOH, BaOH, NH₄OH, et CaOH₂.

4. Procédé selon l'une quelconque des revendications précédentes, dans lequel le réactif est dissous dans un solvant et ladite surface de silicone est placée dans ledit solvant avec le réactif dissous ou où le réactif est sous forme gazeuse et mis en contact avec la surface de silicone dans un environnement gazeux.

5. Procédé selon l'une quelconque des revendications précédentes, comprenant en outre une étape de traitement de la surface de silicone par un réactif de transfert d'azoture pour convertir au moins certains desdits groupes amino introduits en groupes azoture.

6. Procédé selon la revendication 5, dans lequel ledit réactif de transfert d'azoture est choisi parmi l'azoture d'imidazole-1-sulfonyle, l'azoture de triflyle, l'azidotriméthylsilane et l'azoture de sodium.

7. Procédé selon l'une quelconque des revendications précédentes, comprenant en outre une étape de traitement de la surface de silicone par un agent de réticulation qui est de préférence choisi parmi le glutaraldéhyde, le diméthacrylate d'éthylèneglycol, la génépine, l'acide tannique et un éther diglycidylique de polyéthylène glycol.

8. Procédé selon l'une quelconque des revendications précédentes, comprenant en outre une étape de traitement de la surface de silicone par une molécule bioactive choisie parmi le chitosane, un dérivé de chitosane, un oligopeptide et une protéine, pour former un revêtement bioactif.

9. Objet de silicone comportant une surface modifiée comprenant des groupes amino réactifs, pouvant être obtenue par le procédé selon l'une quelconque des revendications 1 à 8.

10. Objet de silicone selon la revendication 9, dans lequel une ou plusieurs molécules choisies parmi un polymère synthétique, une protéine, un peptide, un glucide et une petite molécule bioactive telle qu'un médicament antibiotique, une cytokine ou une hormone ont été liées à au moins certains desdits groupes amino introduits sur la surface de silicone.

11. Objet de silicone selon la revendication 9 ou 10, dans lequel la surface de silicone est en outre modifiée pour modifier les propriétés physico-chimiques ou biologiques, telles que rendre la surface plus hydrophile, plus hydrophobe, antimicrobienne pour résister à une colonisation bactérienne et/ou plus biocompatible.
